# EUROPEAN PATENT APPLICATION

(11) **EP 2 871 834 A1**
(43) Date of publication of application: **13.05.2015**
(21) Application number: 14192772.3
(22) Date of filing: 12.11.2014
(51) Int. Cl.: H04N 5/33, H01L 27/146

(54) **Method for performing sensor function and electronic device thereof**

(30) Priority: 12.11.2013 KR 20130136855
(71) Applicant: Samsung Electronics Co., Ltd, Gyeonggi-do 443-742 (KR)
(72) Inventor: Kang, Hwa-Yong, Gyeonggi-do (KR); Kim, Moon-Soo, Seoul (KR); Jeong, Jin-Hong, Gyeonggi-do (KR); Yoon, Young-Kwon, Seoul (KR); Kim, Tae-Ho, Chungcheongbuk-do (KR)
(74) Representative: Appleyard Lees

(57) **Abstract**

An electronic device and a method for performing a plurality of sensor functions are provided. The method includes detecting at least one of a subject brightness and a peripheral brightness with a sensor formed with a plurality of pixels, reading out a preset pixel group of the plurality of pixels, and performing at least one sensor function based on the read out pixel group.

## Description

### Technical Field

The present disclosure relates to a method for performing of sensor functions and an electronic device thereof.

### Background

With the development of information and communication technology and semiconductor technology, various electronic devices have developed into a multimedia device that provides various multimedia services. For example, the electronic device may provide a multimedia service such as an audio dedicated communication service, an audiovisual communication service, a messenger service, a broadcasting service, a wireless Internet service, a camera service, and a music reproduction service.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a device and method that may enhance economic efficiency by securing in a mounting space of the electronic device a sensor arrangement and by performing a plurality of sensor functions by making arrangement of at least one pixel different from other pixels in a sensor formed with a plurality of pixels.

Another aspect of the present disclosure is to provide a device and method that may enhance user convenience by additionally executing an object tracking function with a sensor formed with a plurality of pixels.

According to the present disclosure there is provided an apparatus and method as set forth in the appended claims. Other features of the disclosure will be apparent from the dependent claims, and the description which follows.

In accordance with an aspect of the present disclosure, a method in an electronic device is provided. The method includes detecting at least one of a subject brightness and a peripheral brightness with a sensor formed with a plurality of pixels, reading out a preset pixel group of the plurality of pixels, and performing at least one sensor function based on the read out pixel group.

In other words, the "reading out" of the method may involve reading output signals from each pixel of a preset pixel group, with the output signals related to light falling on the pixels. The term "pixel" as used herein may refer to an individual pixel sensor, typically arranged as part of an array of individual pixel sensors. Each individual pixel sensor may provide an output signal which is related to light falling on that individual pixel sensor.

The term "subject" as used herein refers to an item from which light originates, directly or indirectly, such as by scattering, reflection or refraction from the subject, and falls onto the plurality of pixels. The term "peripheral brightness" may refer to light falling onto the plurality of pixels which does not originate from the subject, but which comes from the surroundings of the subject.

The light falling onto the plurality of pixels of the sensor may be focused onto the sensor through a focusing means such as a lens or lens arrangement, or may fall directly onto the sensor from the subject and/or the surroundings.

The term "sensor function" as used herein may mean recognition of an object, recognition of a status or recognition of a movement or gesture, for example face recognition, illumination recognition, proximity recognition, iris recognition or gesture recognition.

In accordance with another aspect of the present disclosure, an electronic device is provided. The electronic device includes a processor configured to detect at least one of a subject brightness and a peripheral brightness with a sensor formed with a plurality of pixels and to read out a preset pixel group of the plurality of pixels, and to perform at least one sensor function based on the read out pixel group and a memory configured to store data controlled in the processor.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

For a better understanding of the disclosure, and to show how embodiments of the same may be carried into effect, reference will now be made, by way of example, to the accompanying diagrammatic drawings in which:
FIG. 1 is a block diagram illustrating a configuration of an electronic device according to an embodiment of the present disclosure;
FIG. 2 is a block diagram illustrating a configuration of hardware according to an embodiment of the present disclosure;
FIG. 3 is a block diagram illustrating a configuration of a programming module according to an embodiment of the present disclosure;
FIG. 4 is a diagram schematically illustrating an image device according to an embodiment of the present disclosure;
FIGS. 5A, 5B, and 5C are diagrams illustrating a configuration of a sensor unit included in an image device according to an embodiment of the present disclosure;
FIG. 6 is a diagram illustrating a pixel group according to an embodiment of the present disclosure;
FIG. 7 is a side view of a white pixel and an IR pixel provided in a sensor unit according to an embodiment of the present disclosure;
FIGS. 8A, 8B, 8C, and 8D are diagrams illustrating a pixel array having a plurality of pixels according to an embodiment of the present disclosure;
FIG. 9 is a flowchart illustrating operation order of an electronic device according to an embodiment of the present disclosure; and
FIG. 10 is a flowchart illustrating a method in an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope of the disclosure as set out by the claims. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic device according to the present disclosure may be a device having a communication function. For example, the electronic device may be at least one combination of various devices such as a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), a Moving Picture Experts Group layer-3 (MP3) player, a mobile medical equipment, an electronic bracelet, an electronic necklace, electronic accessory, a camera, a wearable device, an electronic clock, a wrist watch, a smart white appliance (e.g., a refrigerator, an air conditioner, a vacuum cleaner, an artificial intelligence robot, a television, a Digital Video disk (DVD) player, an audio device, an oven, a microwave oven, a washing machine, an air cleaner, and an electronic frame), various medical equipment (e.g., a Magnetic Resonance Angiography (MRA) device, a Magnetic Resonance Imaging (MRI) device, a Computed Tomography (CT) device, a scanning machine, and a ultrasonic wave device), a navigation device, a Global Positioning System (GPS) receiver, an Event Data Recorder (EDR), a Flight Data Recorder (FDR), a set-top box, a television box (e.g., Samsung HomeSync™, Apple TV™, or Google TV™), an electronic dictionary, a vehicle infotainment device, an electronic equipment for ship (e.g., a navigation device for ship and a gyro compass), avionics, a security device, electronic clothing, an electronic key, a camcorder, game consoles, a Head-Mounted Display (HMD), a flat panel display device, an electronic album, a portion of furniture or a building/structure having a communication function, an electronic board, an electronic signature receiving device, and a projector. An electronic device according to the present disclosure is not limited to the foregoing devices.

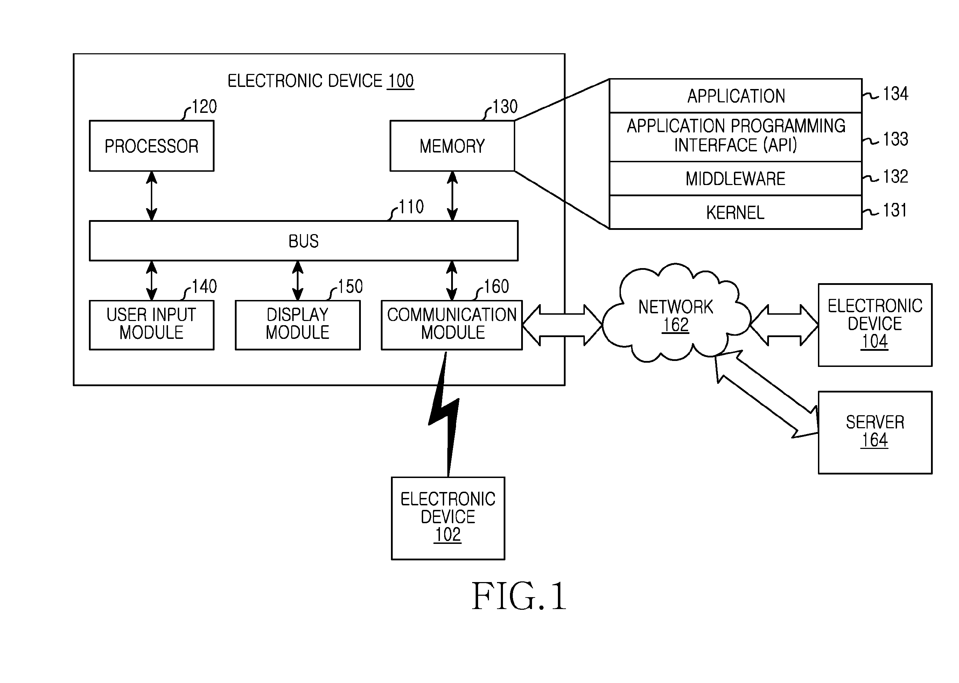

FIG. 1 is a block diagram illustrating a configuration of an electronic device according to an embodiment of the present disclosure.

Referring to FIG. 1, an electronic device 100 may include a bus 110, a processor 120, a memory 130, a user input module 140, a display module 150, or a communication module 160, but is not limited thereto.

The bus 110 may be a circuit that connects the foregoing elements and that performs (e.g., transfers) communication (e.g., a control message) between the foregoing elements.

The processor 120 may receive an instruction from the foregoing other elements (e.g., the memory 130, the user input module 140, the display module 150, and the communication module 160) through, for example, the bus 110, decode the received instruction, and execute a calculation or a data processing according to the decoded instruction.

The memory 130 may store an instruction and/or data received from the processor 120 and/or other elements (e.g., the user input module 140, the display module 150, and the communication module 160) or generated by the processor 120 or other elements. The memory 130 may include programming modules such as a kernel 131, middleware 132, an Application Programming Interface (API) 133, and/or an application 134. Each of the foregoing programming modules may be formed with software, firmware, hardware, or a combination of at least two thereof.

The kernel 131 may control or manage system resources (e.g., the bus 110, the processor 120, and/or the memory 130) used for executing an operation or a function implemented with the remaining programming modules, for example, the middleware 132, the API 133, and/or the application 134. Further, the kernel 131 may provide an interface that is accessed from the middleware 132, the API 133, and/or the application 134 to an individual element of the electronic device 100 to control or manage the individual element.

The middleware 132 may function as an intermediary that enables the API 133 or the application 134 to communicate with the kernel 131 to transmit and receive data. Further, the middleware 132 may perform load balancing of a work request using a method of aligning a priority that may use a system resource (e.g., the bus 110, the processor 120, and/or the memory 130) of the electronic device 100 in, for example, at least one application of the (plurality of) applications 134 in relation to work requests received from the (plurality of) applications 134.

The API 133 is an interface that enables the application 134 to control a function in which the kernel 131 and/or the middleware 132 provides and may include at least one interface or function for, for example, file control, window control, image processing, or character control.

The user input module 140 may receive an input of an instruction or data from a user and transfer the instruction or the data to the processor 120 or the memory 130 through the bus 110. The display module 150 may display a picture, an image, or data to the user.

The communication module 160 may connect communication between another electronic device 102 and the server 164 and the electronic device 100. The communication module 160 may support a predetermined short range communication protocol (e.g., Wireless Fidelity (WiFi), Bluetooth (BT), Near Field Communication (NFC) and/or communication of a predetermined network 162 (e.g., Internet, a Local Area Network (LAN), a Wide Area Network (WAN), a telecommunication network, a cellular network, a satellite network, and/or Plain Old Telephone Service (POTS)). The electronic devices 102 and 104 each may be the same (e.g., the same type) device as the electronic device 100 or may be a device different (e.g., different type) from the electronic device 100.

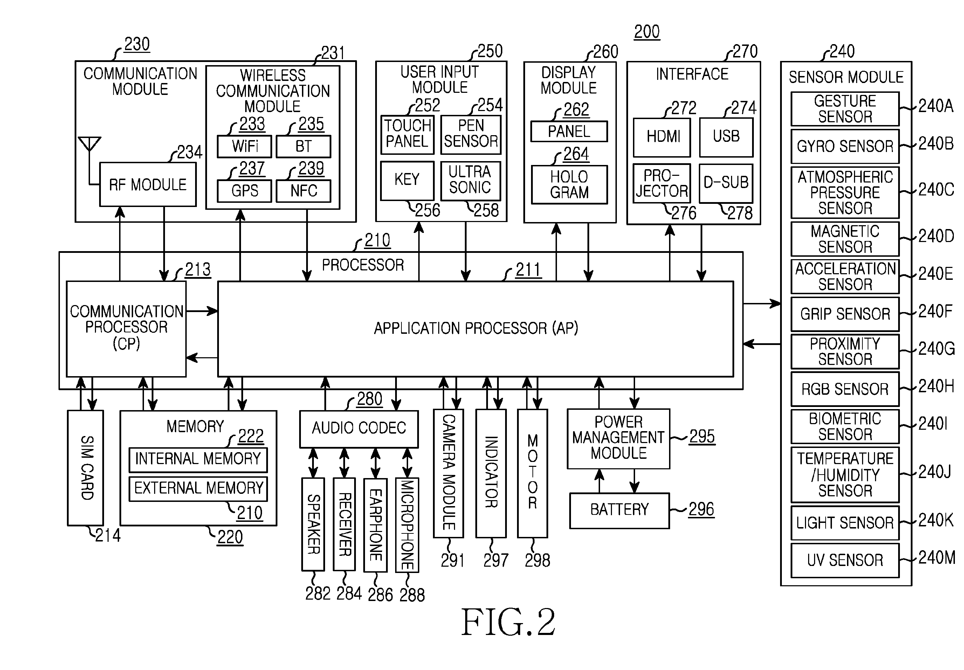

FIG. 2 is a block diagram illustrating a configuration of hardware according to an embodiment of the present disclosure.

Hardware 200 may be, for example, the electronic device 100 of FIG. 1.

Referring to FIG. 2, the hardware 200 may include at least one processor 210, a Subscriber Identification Module (SIM) card 214, a memory 220, a communication module 230, a sensor module 240, a user input module 250, a display module 260, an interface 270, an audio codec 280, a camera module 291, a power management module 295, a battery 296, an indicator 297, and a motor 298, but is not limited thereto.

The processor 210 (e.g., the processor 120) may include at least one Application Processor (AP) 211 or at least one Communication Processor (CP) 213. The processor 210 may be, for example, the processor 120 of FIG. 1. The AP 211 and the CP 213 are included within the processor 210, but the AP 211 and the CP 213 may be included within different IC packages, respectively. In an embodiment, the AP 211 and the CP 213 may be included within an IC package. In the present example embodiment, the processor 210 may detect at least one of a subject and peripheral brightness with a sensor formed with a plurality of pixels, read out a preset pixel group of the plurality of pixels, and performs at least one sensor function based on the read out pixel group. For example, the processor 210 may read an output electrical signal relating to a sensor and/or a measured physical quantity and/or detected operation state from a pixel and/or pixel group. Further, in the processor 210, may detect at least one white pixel of the plurality of pixels provided in the sensor and thereby may detect a face according to a wavelength length of detected visible ray. The terms "wavelength length" and "wavelength" have the same meaning herein. For example, a face may be a face of a person such as a user of the electronic device. Further, the processor 210 may perform an object tracking function based on the read out pixel group. For example, an object may be a person and/or a user of the electronic device and/or a part of a person and/or user of the electronic device and/or whole or part of an object sensed by the electronic device.

The AP 211 may drive an operation system or an application program to control a plurality of hardware and/or software elements connected to the AP 211 and perform various data processing and calculation including multimedia data. The AP 211 may be implemented with, for example, a System on Chip (SoC). According to an embodiment, the processor 210 may further include a Graphic Processing Unit (GPU) (not shown).

The CP 213 may perform a function of managing a data link in communication between an electronic device (e.g., the electronic device 100) including the hardware 200 and other electronic devices connected by a network and a function of converting a communication protocol. The CP 213 may be implemented with, for example, an SoC. According to an embodiment, the CP 213 may perform at least a portion of a multimedia control function. The CP 213 may perform identification and authentication of a terminal within a communication network using, for example, a subscriber identification module (e.g., the SIM card 214). Further, the CP 213 may provide services such as audio dedicated communication, audiovisual communication, a text message, or packet data to the user.

Further, the CP 213 may control data transmission and reception of the communication module 230. Elements of the CP 213, the power management module 295, or the memory 220 are elements separate from the AP 211, but according to an embodiment, the AP 211 may include at least a portion (e.g., the CP 213) of the foregoing elements.

According to an embodiment, the AP 211 or the CP 213 may load and process an instruction or data received from at least one of other elements or a non-volatile memory connected to each thereof in a volatile memory. Further, the AP 211 or the CP 213 may store data received from at least one of other elements or generated by at least one of other elements at a non-volatile memory.

The SIM card 214 may be a card that implements a subscriber identification module and may be inserted into a slot formed at a specific location of the electronic device. The SIM card 214 may include intrinsic identification information (e.g., Integrated Circuit Card Identifier (ICCID) or subscriber information (e.g., International Mobile Subscriber Identity (IMSI).

The memory 220 may include an internal memory 222 and/or an external memory 224. The memory 220 may be, for example, the memory 130 of FIG. 1. The internal memory 222 may include at least one of, for example, a volatile memory (e.g., a Dynamic RAM (DRAM), a Static RAM (SRAM), a Synchronous Dynamic RAM (SDRAM)), or a non-volatile memory (e.g., a One Time Programmable ROM (OTPROM), a Programmable ROM (PROM), an Erasable and Programmable ROM (EPROM), an Electrically Erasable and Programmable ROM (EEPROM), a mask ROM, a flash ROM, a NAND flash memory, and a NOR flash memory). According to an embodiment, the external memory 222 may have a form of a Solid State Drive (SSD). The external memory 224 may further include, for example, a Compact Flash (CF), Secure Digital (SD), Micro Secure Digital (Micro-SD), Mini Secure Digital (Mini-SD), extreme Digital (xD), or a memory stick.

The communication module 230 may include a wireless communication module 231 or a Radio Frequency (RF) module 234. The communication module 230 may be, for example, the communication module 160 of FIG. 1. The wireless communication module 231 may include, for example, a WiFi module 233, a Bluetooth (BT) module 235, a GPS module 237, and/or an NFC module 239. For example, the wireless communication module 231 may provide a wireless communication function using a radio frequency. Additionally or alternatively, the wireless communication module 231 may include a network interface (e.g., a LAN card) or a modem for connecting the hardware 200 to a network (e.g., Internet, a LAN, a WAN, a telecommunication network, a cellular network, a satellite network, and/or a POTS.

The RF module 234 may perform transmission and reception of data, for example, transmission and reception of an RF signal or a called electronic signal. Although not shown, the RF module 234 may include, for example, a transceiver, a Power Amp Module (PAM), a frequency filter, or a Low Noise Amplifier (LNA). Further, the RF module 234 may further include a component, for example, a conductor or a conductive wire for transmitting and receiving electromagnetic waves on free space in wireless communication.

The sensor module 240 may include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, and Blue (RGB) sensor 240H, a bio sensor 240I, a temperature/humidity sensor 240J, an illumination sensor 240K, and/or a Ultra Violet (UV) sensor 240M. The sensor module 240 may measure a physical quantity and/or detect an operation state of the electronic device and convert measured or detected information to an electric signal. Additionally or alternatively, the sensor module 240 may include, for example, an E-nose sensor (not shown), an electromyography sensor (EMG sensor) (not shown), an electroencephalogram sensor (EEG sensor) (not shown), an electrocardiogram sensor (ECG sensor) (not shown), and/or a fingerprint sensor. The sensor module 240 may further include a control circuit that controls at least one sensor belonging to the inside thereof.

The user input module 250 may include a touch panel 252, a (digital) pen sensor 254, a key 256, and/or an ultrasonic wave input device 258. The user input module 250 may be, for example, the user input module 140 of FIG. 1. The touch panel 252 may recognize a touch input with at least one method of, for example, a capacitive, resistive, infrared ray, or ultrasonic wave method. Further, the touch panel 252 may further include a controller (not shown). When the touch panel 252 is a capacitive type touch panel, the touch panel 252 may perform a direct touch or proximity recognition. The touch panel 252 may further include a tactile layer. In this case, the touch panel 252 may provide a haptic reaction to the user.

The (digital) pen sensor 254 may be implemented using the same method as and a method similar to, for example, reception of a touch input of the user or a separate recognition sheet. As the key 256, for example, a keypad or a touch key may be used. The ultrasonic wave input device 258 may determine data by detecting a sound wave with a microphone (e.g., a microphone 288) in a terminal through a pen that generates an ultrasonic wave signal and may perform wireless recognition. According to an embodiment, the hardware 200 may receive a user input from an external device (e.g., a network, a computer, or a server) connected to the communication module 230 using the communication module 230.

The display module 260 may include a panel 262 and/or a hologram 264. The display module 260 may be, for example, the display module 150 of FIG. 1. The panel 262 may be, for example, a Liquid Crystal Display (LCD) or an Active-Matrix Organic Light-Emitting Diode (AM-OLED). The panel 262 may be implemented with, for example, a flexible, transparent, or wearable method. The panel 262 and the touch panel 252 may be formed in one module. The hologram 264 may show a stereoscopic image in the air using interference of light. According to an embodiment, the display module 260 may further include a control circuit that controls the panel 262 or the hologram 264.

The interface 270 may include, for example, a High-Definition Multimedia Interface (HDMI) 272, a Universal Serial Bus (USB) 274, a projector 276, and/or a D-Subminiature (D-SUB) 278. Additionally or alternatively, the interface 270 may include, for example, Secure Digital (SD)/MultiMedia Card (MMC)(not shown) or Infrared Data Association (IrDA) (not shown).

The audio codec 280 may interactively convert a sound and an electronic signal. The audio codec 280 may convert sound information input and output through, for example, a speaker 282, a receiver 984, an earphone 286, and/or a microphone 288.

The camera module 291 may photograph an image and/or a moving picture and may include at least one image sensor (e.g., a front surface lens or a rear surface lens), an Image Signal Processor (ISP) (not shown), or a flash Light Emitting diode (LED) (not shown) according to an embodiment.

The power management module 295 may manage power of the hardware 200. Although not shown, the power management module 295 may include, for example, a Power Management Integrated Circuit (PMIC), a charger Integrated Circuit (charge IC), or a battery fuel gauge.

The PMIC may be mounted within, for example, an IC or an SoC semiconductor. A charging method may be classified into a wired method and a wireless method. The charge IC may charge a battery and prevent an overvoltage or an overcurrent from being injected from a charger. According to an embodiment, the charge IC may include a charge IC for at least one of a wired charge method and a wireless charge method. The wireless charge method may include, for example, a magnetic resonance method, a magnetic induction method, or an electromagnetic wave method and may add an additional circuit, for example, a circuit such as a coil loop, a resonant circuit, and a rectifier for wireless charge.

The battery gauge may measure, for example, a residual quantity of the battery 296 and a voltage, a current, or a temperature while charging. The battery 296 may generate electricity and supply the electricity to a power source and may be, for example, a rechargeable battery.

The indicator 297 may display a specific state, for example, a booting state, a message state, or a charge state of the hardware 200 or a portion (e.g., the AP 211) thereof. The motor 298 may convert an electrical signal to a mechanical vibration. A Main Control Unit (MCU) (not shown) may control the sensor module 240.

Although not shown, the hardware 200 may include a processing device (e.g., GPU) for supporting a mobile TV. The processing device for supporting the mobile TV may process media data according to a specification of, for example, Digital Multimedia Broadcasting (DMB), Digital Video Broadcasting (DVB), or media flow.

A name of the foregoing elements of hardware according to the present disclosure may be changed according to a kind of an electronic device. Hardware according to the present disclosure may include at least one of the foregoing elements and may be formed in a form in which some elements are omitted or may further include additional other elements. Further, as some of elements of hardware according to the present disclosure are coupled to form an entity, the entity may equally perform a function of corresponding elements before coupling.

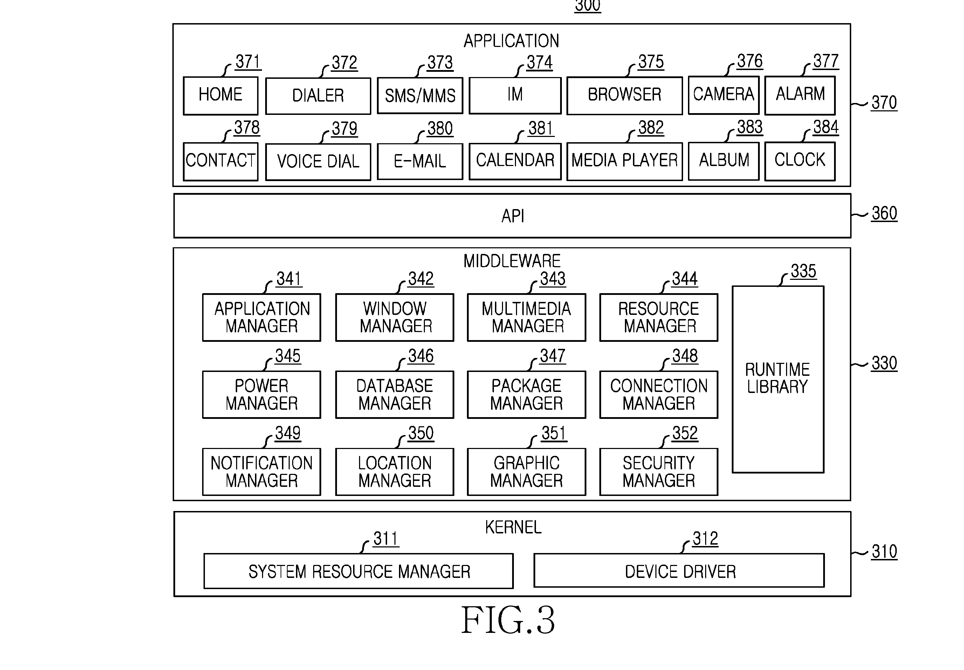

FIG. 3 is a block diagram illustrating a configuration of a programming module according to an embodiment of the present disclosure.

Referring to FIG. 3, a programming module 300 may be included (e.g., stored) in the electronic device 100 (e.g., the memory 130) of FIG. 1. At least a portion of the programming module 300 may be formed with software, firmware, hardware or a combination of at least two thereof. The programming module 300 may include an operation system (OS) implemented in hardware (e.g., the hardware 200) to control a resource related to the electronic device (e.g., the electronic device 100) or various applications (e.g., an application 370) to be driven on an operation system. For example, the operation system may be Android, iOS, Windows, Symbian, Tizen, or Bada.

The programming module 300 may include a kernel 310, middleware 330, an API 360, and the application 370.

The kernel 310 (e.g., the kernel 131) may include a system resource manager 311 and a device driver 312. The system resource manager 311 may include, for example, a process management unit (not shown), a memory management unit (not shown), and/or a file system management unit (not shown). The system resource manager 311 may perform the control, allocation, or recovery of a system resource. The device driver 312 may include, for example, a display driver (not shown), a camera driver (not shown), a Bluetooth driver (not shown), a sharing memory driver (not shown), a USB driver (not shown), a keypad driver (not shown), a WiFi driver (not shown), or an audio driver (not shown). Further, according to an embodiment, the device driver 312 may include an Inter-Process Communication (IPC) driver (not shown).

In order to provide a function in which the application 370 commonly requires, the middleware 330 may include a plurality of previously implemented modules. Further, in order to enable the application 370 to efficiently use a limited system resource within the electronic device, the middleware 330 may provide a function through the API 360. For example, the middleware 330 (e.g., the middleware 132) may include at least one of a run-time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and/or a security manager 352.

In order to add a new function through a programming language while, for example, the application 370 is being executed, the run-time library 335 may include a library module in which a compiler is used. According to an embodiment, the run-time library 335 may perform a function of an input and output, memory management, or an arithmetic function.

The application manager 341 may manage a life cycle of at least one application of, for example, the applications 370. The window manager 342 may manage a Graphical User Interface (GUI) resource using on a screen. The multimedia manager 343 may grasp a format necessary for reproduction of various media files and perform encoding or decoding of a media file using a codec appropriate to a corresponding format. The resource manager 344 may manage a resource such as a source code, a memory, or storage space of at least one of the applications 370.

The power manager 345 may manage a battery or a power source by operating together with a Basic Input/Output System (BIOS) and provide power information necessary for operation. The database manager 346 may manage a database so as to generate, search for, or change the database to be used in at least one of the applications 370. The package manager 347 may manage installation or update of an application distributed in a package file form.

The connectivity manager 348 may manage wireless connection of, for example, WiFi or Bluetooth. The notification manager 349 may display or notify an event of an arrival message, appointment, and proximity notification with a method of not disturbing a user. The location manager 350 may manage location information of the electronic device. The graphic manager 351 may manage a graphic effect to provide to a user or a user interface related thereto. The security manager 352 may provide a security function necessary for system security or user authentication. According to an embodiment, when the electronic device (e.g., the electronic device 100) has a phone function, the middleware 330 may further include a telephony manager (not shown) for managing an audio dedicated communication or audiovisual communication function of the electronic device.

The middleware 330 may generate and use a new middleware module through a combination of various functions of the foregoing internal element modules. In order to provide a distinguished function, the middleware 330 may provide a module specialized on a kind basis of an operation system. Further, the middleware 330 may dynamically delete some of existing elements or may add a new element. Therefore, the middleware 330 may omit some of elements described in an embodiment of the present disclosure, may further include other elements, or may be replaced with an element that performs a similar function and that has another name.

The API 360 (e.g., the API 133) is a set of API programming functions and may be provided in another element according to an operation system. For example, in Android or IOS, for example, an API set may be provided on a platform basis, and in Tizen, for example, two or more API sets may be provided.

The application 370 (e.g., the application 134) may include, for example, a preloaded application or a third party application. The application 370 may include one or more of a Home function 371, a dialer 372, a Short Message Service (SMS)/Multimedia Message Service (MMS) 373, an Instant Message service 374, a browser 375, a camera application 376, an alarm 377, a contacts application 378, a voice dial function 379, an email application 380, a calendar 381, a media player 382, an album 383, and/or a clock 384.

At least a portion of the programming module 300 may be implemented with an instruction stored on a computer-readable storage media. When an instruction is executed by at least one processor (e.g., the processor 210), the at least one processor may perform a function corresponding to an instruction. The computer-readable storage media may be, for example, the memory 220. At least a portion of the programming module 300 may be implemented (e.g., executed) by, for example, the processor 210. At least a portion of the programming module 300 may include, for example, a module, a program, a routine, sets of instructions, or a process for performing at least one function.

A name of elements of a programming module (e.g., the programming module 300) according to an embodiment of the present disclosure may be changed according to a kind of an operation system. Further, a programming module according to an embodiment of the present disclosure may include at least one of the foregoing elements, may be elements in which some of the foregoing elements are omitted, or may further include additional other elements.

In accordance with another aspect of the present disclosure, an electronic device includes: a processor that detects at least one of a subject and peripheral brightness with a sensor formed with a plurality of pixels and that reads out a preset pixel group of the plurality of pixels and that performs at least one sensor function based on the read out pixel group; and a memory that stores data controlled in the processor. That is, a sensor may be and/or include a plurality of pixels.

The sensor may be formed with at least one white pixel and/or at least one Infrared Ray (IR) pixel. That is, a sensor may be and/or include at least one white pixel and/or at least one Infrared Ray (IR) pixel. The term "white pixel" may be taken to refer to a pixel which is adapted to provide an output signal at least in response to light in the visible spectrum falling upon the pixel. The visible spectrum may include light having a wavelength from say 380 to 770 nm. The term "IR pixel" may be taken to refer to a pixel which is adapted to provide an output signal at least in response to light in the infrared spectrum falling upon the pixel. The infrared spectrum may include light having a wavelength of 750nm or more.

The sensor may be made of a first material in which an absorption rate of visible ray (i.e. light in the visible spectrum) may be at least a first preset absorption rate and/or a second material in which an absorption rate of infrared ray (i.e. light in the infrared spectrum) may be at least a second preset absorption rate. For example, an absorption rate of a ray may be an absorbance of the ray.

The first material and/or the second material have different vertical depths within the same pixel. That is, the first material and the second material may be at the same and/or different vertical depths within the same pixel, where the depths are measured relative to, and normal to, a surface of the pixel.

In the processor, at least one white pixel of the plurality of pixels provided in the sensor may detect a face according to a wavelength length of detected visible ray. That is, the processor may detect a face according to a wavelength of detected visible ray, according to at least one white pixel of the plurality of pixels provided in the sensor.

At least one IR pixel of the plurality of pixels provided in the sensor may detect that a subject is located within a preset distance according to a wavelength length of detected infrared ray. That is, the processor may detect that a subject is located within a preset distance according to at least one IR pixel of the plurality of pixels provided in the sensor.

In the processor, at least one IR pixel of the plurality of pixels provided in the sensor may detect an iris according to a wavelength length of detected infrared ray. For example, an iris may be an iris of a person and/or a user of the electronic device. That is, the processor may detect an iris according to at least one IR pixel of the plurality of pixels provided in the sensor.

The pixel group may be formed with at least one of a plurality of pixels formed in the sensor.

The at least one sensor function may be at least one of a face recognition function, an illumination recognition function, a proximity recognition function, an iris recognition function, and/or a gesture recognition function.

The processor may perform an object tracking function based on the read out pixel group.

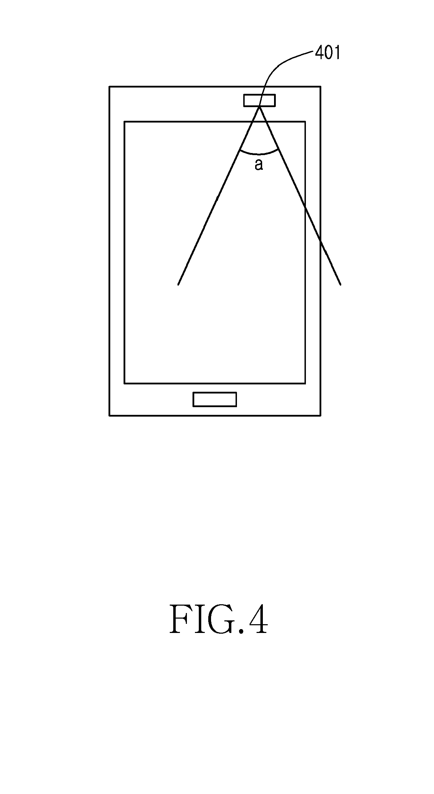

FIG. 4 is a diagram schematically illustrating an image device according to an embodiment of the present disclosure.

Referring to FIG. 4, an electronic device according to an embodiment of the present disclosure may have an image device 401 in a preset area.

The image device 401 may include a light emitting diode light emitting unit and/or a sensor unit. The light emitting diode light emitting unit may be an Infrared Ray (IR) light emitting diode. The sensor unit may be and/or include a sensor and/or a sensor module. In other words, a sensor may be and/or include a sensor unit and/or a sensor module. In other words, a sensor module may be and/or include a sensor and/or a sensor unit. Further, the sensor unit may be formed with a pixel array including a plurality of pixels. More specifically, the sensor unit may be formed with a plurality of white pixels and/or a plurality of IR pixels as explained hereinbefore and may be made of a first material in which an absorption rate of visible ray may be at least a first preset absorption rate and/or a second material in which an absorption rate of infrared ray may be at least a second preset absorption rate. Further, the sensor unit may be made of a first material and/or a second material having different vertical depths within the same pixel.

Further, the image device 401 may be provided at a front surface of the electronic device to perform a plurality of sensor functions. More specifically, the image device 401 provided at a front surface of the electronic device may perform a plurality of sensor functions such as a face recognition function, an illumination recognition function, a proximity recognition function, an iris recognition function, and/or a gesture recognition function through the sensor unit.

Further, the image device 401 may have an angle of view larger than that of any or each of a plurality of cameras provided in the electronic device. By "angle of view" may be meant the solid angle over which light may fall onto the pixel array of the image device. More specifically, because the image device 401 may perform various sensor functions using a sensor unit therein, the image device 401 may have a range of an angle of view larger than that of an existing camera. As described above, the image device 401 according to an embodiment of the present disclosure may include a light emitting diode light emitting unit and a sensor unit, but because the light emitting diode or other light emitting unit, if present, may be provided in a separate location, the image device 401 may be formed with a sensor unit and without a light emitting unit..

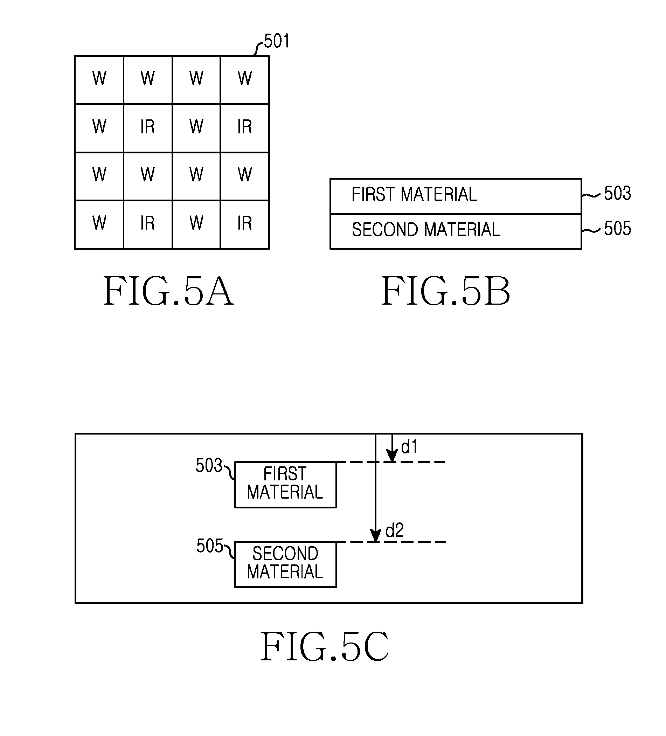

FIGS. 5A, 5B, and 5C are diagrams illustrating a configuration of a sensor unit included in an image device according to an embodiment of the present disclosure.

In order to perform a plurality of sensor functions, a sensor unit according to an embodiment of the present disclosure may be formed with a plurality of white pixels and/or a plurality of IR pixels.

Referring to FIG. 5A, in the sensor unit 501, a plurality of white pixels and/or a plurality of IR pixels may be arranged according to a preset combination. Therefore, arrangement of a white pixel and/or an IR pixel shown in the present embodiment may be changed according to user setting.

The white pixel provided in the sensor unit may detect a face according to a wavelength length of detected visible ray. More specifically, the white pixel may detect a wavelength length of a band between about 380nm and 770nm and may perform a face recognition function according to the detected wavelength length. That is, the white pixel may detect a wavelength for performing a face recognition function.

Further, the IR pixel provided in the sensor unit may detect that a subject is located within a preset distance according to a wavelength length of detected infrared ray. For example, a subject may be an iris and/or a person and/or a user of the electronic device. More specifically, the IR pixel may detect light having a wavelength length falling in a band between about 0.75 µm and 1mm, i.e. from 750 to 1000nm, and may, for instance perform a gesture recognition function according to the detected wavelength length. That is, the IR pixel may detect a wavelength for performing a gesture recognition function.

Further, the IR pixel provided in the sensor unit may detect an iris according to a wavelength length of detected infrared ray. More specifically, the IR pixel may detect a wavelength length of a band between about 0.75 µm and 1 mm and may perform an iris recognition function according to the detected wavelength length. That is, the IR pixel may detect a wavelength for performing an iris recognition function.

Referring to FIG. 5B, a sensor unit according to an embodiment of the present disclosure may be made of a first material 503 in which an absorption rate of visible ray may be at least a first preset absorption rate and/or a second material 505 in which an absorption rate of infrared ray may be at least a second preset absorption rate. That is, the sensor unit may be formed in a structure stacked with a first material 503 made of a material in which an absorption rate of visible ray is good and/or a second material 505 in which an absorption rate of infrared ray is good. In stacking order of the first material 503 and the second material 505 forming the sensor unit, the first material 503 or the second material 505 may be located in an upper layer.

Referring to FIG. 5C, in a sensor unit according to an embodiment of the present disclosure, a first material 503 in which an absorption rate of visible ray may be at least a first preset absorption rate and a second material 505 in which an absorption rate of infrared ray may be at least a second preset absorption rate may be formed in different vertical depths d1 and d2 within the same pixel. In a vertical depth of the first material 503 and the second material 505 forming the sensor unit, the first material may have a depth greater than that of the second material.

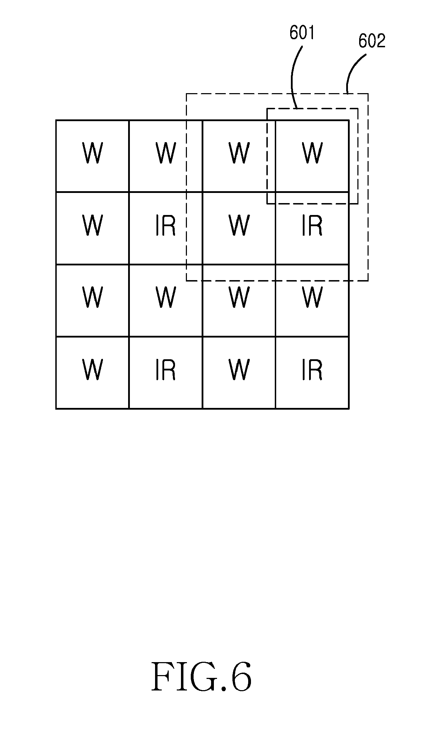

FIG. 6 is a diagram illustrating a pixel group according to an embodiment of the present disclosure.

Hereinafter, in the present embodiment, a case in which a sensor unit may detect a subject and/or peripheral brightness is formed with a plurality of white pixels and/or IR pixels is illustrated. For example, a brightness may be a luminance and/or luminance of a preset wavelength. For example, a subject brightness may be a luminance radiated and/or reflected and/or refracted and/or diffracted and/or scattered by and/or from a subject. For example, a peripheral brightness may be a luminance radiated and/or reflected and/or refracted and/or diffracted and/or scattered by and/or from a periphery of the electronic device and/or subject. For example, a peripheral brightness may relate to a peripheral region and/or area and/or angle to the electronic device and/or subject. That is, a peripheral brightness may relate to a surrounding and/or adjacent and/or neighbouring and/or not adjacent and/or remote region and/or area and/or angle to the electronic device and/or subject.

First, in the electronic device, the sensor formed with a plurality of pixels may detect at least one of a subject and/or peripheral brightness.

Referring to FIG. 6, in the electronic device, the sensor formed with a plurality of white pixels and/or a plurality of IR pixels may detect at least one of a subject and/or peripheral brightness.

The electronic device may read out a preset pixel group of a plurality of pixels. The preset pixel group may be formed with at least one pixel of a plurality of pixels formed in the sensor. For example, a preset pixel group may be a pixel group 601 formed with one white pixel and may be a pixel group 602 formed with three white pixels and one IR pixel. That is, a pixel array may be and/or include one or more preset pixel groups.

Further, although not shown in FIG. 6, a preset pixel group may increase and/or decrease the pixel number, as needed. That is, the electronic device may increase or decrease a pixel number of a preset pixel group, as needed That is, a preset pixel group may be formed with 9x9 pixel groups and/or may be formed with 16x16 pixel groups. For example, a pixel array may include a plurality of preset pixel groups in which the pixel number is the same or different for the preset pixel groups.

However, in the electronic device, in order to perform a face recognition function, an iris recognition function, and/or a proximity recognition function, it is preferable that a preset pixel group is arranged with at least one white pixel and at least one IR pixel. This is because in order for the electronic device to perform a face recognition function, a white pixel that does not detect a color is preferable, and in order for the electronic device to perform an iris recognition function and a proximity recognition function, an IR pixel that passes through only infrared ray is preferable.

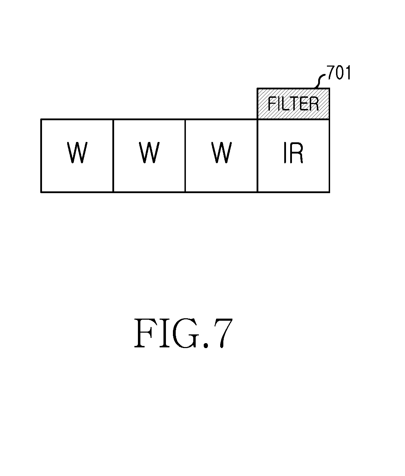

FIG. 7 is a side view of a white pixel and an IR pixel provided in a sensor unit according to an embodiment of the present disclosure.

Hereinafter, the sensor unit may be formed with arrangement of a white pixel and an IR pixel, and a case in which the pixel group is formed with three white pixels and one IR pixel is exemplified.

Referring to FIG. 7, a white pixel arranged in the sensor unit of the electronic device may not include a filter. More specifically, because the white pixel does not detect a color, the white pixel may not include a filter. That is, the white pixel does not include a filter, and in order for the electronic device to perform a face recognition function, the electronic device should provide at least one white pixel.

Further, an IR pixel arranged in the sensor unit of the electronic device may include a filter 701. More specifically, because the IR pixel has a filter that passes through only infrared ray, the electronic device may perform an iris recognition function and a proximity recognition function. That is, in order to perform an iris recognition function and/or a proximity recognition function, the electronic device should preferably have at least one IR pixel.

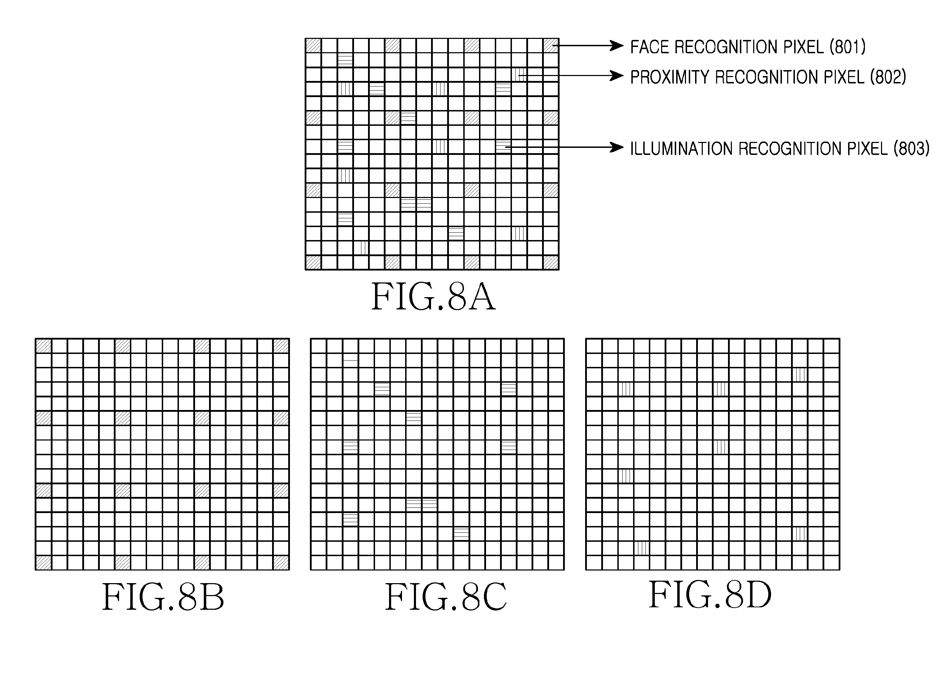

FIGS. 8A, 8B, 8C, and 8D are diagrams illustrating a pixel array having a plurality of pixels according to an embodiment of the present disclosure.

The electronic device may have at least one pixel array in a sensor unit located in a preset area. In order to perform a plurality of sensor functions, a pixel formed with at least one pixel of pixels may be set to the electronic device.

Referring to FIG. 8A, a face recognition pixel 801, a proximity recognition pixel 802, and/or an illumination recognition pixel 803 may be previously set to the electronic device. Further, although not shown in FIG. 8A, an iris recognition pixel and/or a gesture recognition pixel may be previously set to the electronic device.

Further, in the electronic device, a separate pixel may be set according to each sensor function, but a pixel group formed with at least one pixel may be set. For example, in the electronic device, in order to perform a face recognition function, a pixel group including the face recognition pixel 801 may be set. Similarly, in the electronic device, in order to perform a proximity recognition function, an illumination recognition function, an iris recognition function, and/or a gesture recognition function, a pixel group including each pixel may be set.

In the electronic device, a pixel group that performs each function may be repeatedly set. That is, in the electronic device, a pixel group for performing a face recognition function, a proximity recognition function, an illumination recognition function, an iris recognition function, and/or a gesture recognition function may be equally set. Therefore, a pixel provided in a sensor unit of the electronic device may perform a proximity recognition function while performing a face recognition function. Further, the electronic device may rearrange a pixel arranged in the sensor unit at a preset time and may rearrange a pixel arranged in the sensor unit according to a specific event.

Further, when reading out a pixel group, the electronic device may simultaneously or sequentially read out each pixel that performs a preset sensor function. For example, when reading out a pixel group, the electronic device may simultaneously read out each pixel that performs a preset sensor function.

Referring to FIGS. 8B to 8D, when reading out a pixel group, the electronic device may sequentially read out a pixel group.

Further, although not shown in FIG. 8B, the electronic device may perform an object tracking function, which may be a function of tracking and/or reading out a movement of only a specific object.

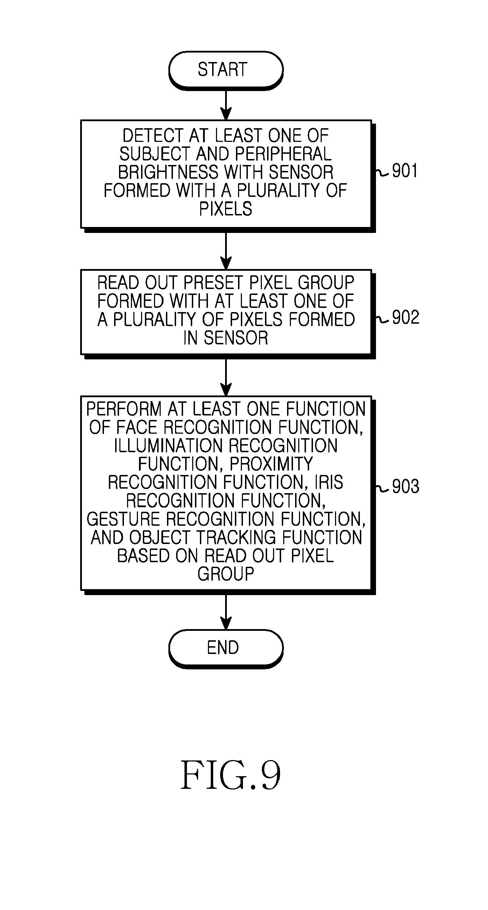

FIG. 9 is a flowchart illustrating operation order of an electronic device according to an embodiment of the present disclosure.

Referring to FIG. 9, the electronic device may detect at least one of a subject and/or peripheral brightness with a sensor formed with a plurality of pixels at operation 901. In order to perform a plurality of sensor functions, a sensor provided in the electronic device may be formed with a plurality of white pixels and/or a plurality of IR pixels. For example, the sensor may be made of a first material in which an absorption rate of visible ray may be at least a first preset absorption rate and/or a second material in which an absorption rate of infrared ray may be at least a second preset absorption rate. For example, the sensor may be formed so that a first material in which an absorption rate of visible ray may be at least a first preset absorption rate and/or a second material in which an absorption rate of infrared ray may be at least a second preset absorption rate have different vertical depths within the same pixel.

The electronic device may read out a preset pixel group formed with at least one of a plurality of pixels formed in the sensor at operation 902. The preset pixel group may be formed with at least one of a plurality of pixels formed in the sensor. For example, the pixel group may be a pixel group formed with one white pixel and/or may be a pixel group formed with three white pixels and one IR pixel. Further, the pixel group may increase and/or decrease the pixel number, as needed. That is, a preset pixel group may be formed with 9x9 pixel groups and/or 16x16 pixel groups.

The electronic device may perform at least one function of a face recognition function, an illumination recognition function, a proximity recognition function, an iris recognition function, a gesture recognition function, and/or an object tracking function based on the read out pixel group at operation 903. More specifically, the electronic device may perform a plurality of sensor functions with one sensor located in a preset area thereof. When reading out a pixel group, the electronic device may simultaneously or sequentially read out each pixel that performs a preset sensor function, thereby performing a plurality of sensor functions.

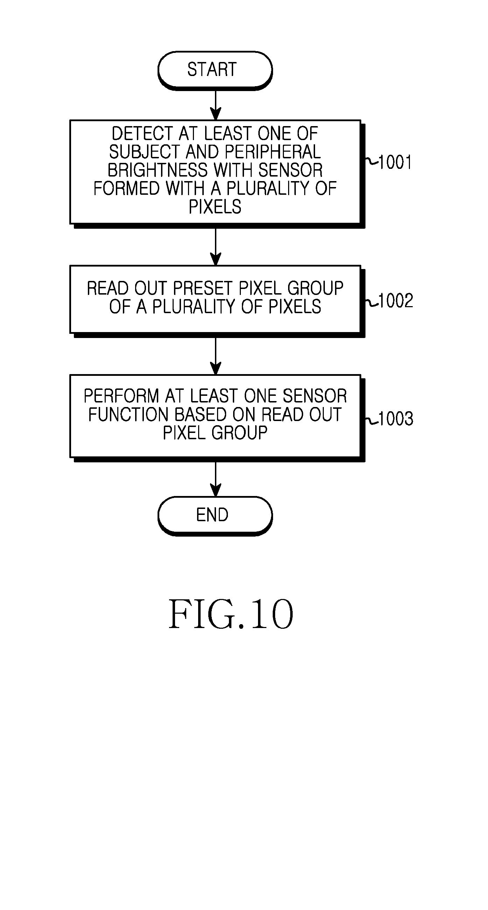

FIG. 10 is a flowchart illustrating a method in an electronic device according to an embodiment of the present disclosure.

Referring to FIG. 10, the electronic device may detect at least one of a subject and/or peripheral brightness with a sensor formed with a plurality of pixels at operation 1001. The sensor may be included in an image device, and the image device may include a light emitting diode light emitting unit. The light emitting diode light emitting unit may be an IR light emitting diode. Further, the sensor may be formed with a pixel array including a plurality of pixels. More specifically, the sensor may be formed with a plurality of white pixels and/or a plurality of IR pixels and may be made of a first material in which an absorption rate of visible ray may be at least a first preset absorption rate and/or a second material in which an absorption rate of infrared ray may be at least a second preset absorption rate. Further, the sensor may be made of a first material and/or a second material having different vertical depths within the same pixel.

The electronic device may read out a preset pixel group of a plurality of pixels at operation 1002. The preset pixel group may be formed with at least one pixel of a plurality of pixels formed in the sensor. For example, the pixel group may be a pixel group formed with one white pixel and/or may be a pixel group formed with three white pixels and one IR pixel. Further, the pixel group may increase and/or decrease the pixel number, as needed. Further, when reading out a pixel group, the electronic device may simultaneously or sequentially read out each pixel that performs a preset sensor function.

The electronic device may perform at least one sensor function based on the read out pixel group at operation 1003. More specifically, the electronic device may perform at least one of a face recognition function, an illumination recognition function, a proximity recognition function, an iris recognition function, a gesture recognition function, and/or an object tracking function based on the read out pixel group.

In accordance with an aspect of the present disclosure, there is provided a method of operating an electronic device, the method comprising: detecting at least one of a subject brightness and a peripheral brightness with a sensor formed with a plurality of pixels; reading out a preset pixel group of the plurality of pixels; and performing at least one sensor function based on the read out pixel group.

The sensor may be formed with at least one white pixel and/or at least one Infrared Ray (IR) pixel.

The sensor may be made of a first material in which an absorption rate of visible ray may be at least a first preset absorption rate and/or a second material in which an absorption rate of infrared ray may be at least a second preset absorption rate.

The first material and the second material may have different vertical depths within the same pixel.

The detecting may comprise detecting, by at least one white pixel of the plurality of pixels provided in the sensor, a face according to a wavelength length of detected visible ray.

The detecting may comprise detecting, by at least one IR pixel of the plurality of pixels provided in the sensor, that a subject is located within a preset distance according to a wavelength length of detected infrared ray.

The detecting may comprises detecting, by at least one IR pixel of the plurality of pixels provided in the sensor, an iris according to a wavelength length of detected infrared ray.

The pixel group may formed with at least one of a plurality of pixels formed in the sensor.

The at least one sensor function may be at least one of a face recognition function, an illumination recognition function, a proximity recognition function, an iris recognition function, and/or a gesture recognition function.

The method may further comprise performing an object tracking function based on the read out pixel group.

It will be appreciated that various embodiments of the present disclosure according to the claims and description in the specification may be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, various embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although a few preferred embodiments have been shown and described, it will be appreciated by those skilled in the art that various changes and modifications might be made without departing from the scope of the disclosure, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The disclosure is not restricted to the details of the foregoing embodiment(s). The disclosure extends to any novel one, or any novel combination, of the features disclosed in this specification (including any accompanying claims and drawings), or to any novel one, or any novel combination, of the steps of any method or process so disclosed.

## Claims

1. A method in an electronic device (100), the method comprising:
detecting at least one of a subject brightness and a peripheral brightness with a sensor formed with a plurality of pixels (901, 1001);
reading out a preset pixel group (601, 602) of the plurality of pixels (902, 1002); and
performing at least one sensor function based on the read out pixel group (903, 1003).

2. The method of claim 1, wherein the sensor is formed with at least one white pixel and at least one Infrared Ray, IR, pixel.

3. The method of claim 1 or claim 2, wherein the sensor is made of a first material (503) in which an absorption rate of visible ray is at least a first preset absorption rate, and a second material (505) in which an absorption rate of infrared ray is at least a second preset absorption rate, and
wherein the first material (503) and the second material (505) have different vertical depths (d1, d2) within the same pixel.

4. The method of any preceding claim, wherein the detecting the at least one of the subject brightness and the peripheral brightness comprises detecting, by at least one white pixel of the plurality of pixels provided in the sensor, a face according to a wavelength length of detected visible ray.

5. The method of any preceding claim, wherein the detecting the at least one of the subject brightness and the peripheral brightness comprises detecting, by at least one IR pixel of the plurality of pixels provided in the sensor, that a subject is located within a preset distance according to a wavelength length of a detected infrared ray.

6. The method of any preceding claim, wherein the detecting the at least one of the subject brightness and the peripheral brightness comprises detecting, by at least one IR pixel of the plurality of pixels provided in the sensor, an iris according to a wavelength length of detected infrared ray.

7. The method of any preceding claim, further comprising performing an object tracking function based on the read out pixel group.

8. An electronic device (100), the electronic device comprising:
a processor (120) configured to detect at least one of a subject brightness and a peripheral brightness with a sensor formed with a plurality of pixels, to read out a preset pixel group (601, 602) of the plurality of pixels, and to perform at least one sensor function based on the read out pixel group; and
a memory (130) configured to store data controlled in the processor.

9. The electronic device (100) of claim 8, wherein the sensor is formed with at least one white pixel and at least one Infrared Ray, IR, pixel.

10. The electronic device (100) of claim 8 or claim 9, wherein the sensor is made of a first material (503) in which an absorption rate of visible ray is at least a first preset absorption rate, and a second material (505) in which an absorption rate of infrared ray is at least a second preset absorption rate.

11. The electronic device (100) of claim 10, wherein the first material (503) and the second material (505) have different vertical depths (d1, d2) within the same pixel.

12. The electronic device (100) of any of claims 8 to 11, wherein in the processor (120)at least one white pixel of the plurality of pixels provided in the sensor detects a face according to a wavelength length of detected visible ray.

13. The electronic device (100) of any of claims 8 to 12, wherein at least one IR pixel of the plurality of pixels provided in the sensor detects that a subject is located within a preset distance according to a wavelength length of detected infrared ray.

14. The electronic device (100) of any of claims 8 to 13, wherein in the processor (120) at least one IR pixel of the plurality of pixels provided in the sensor detects an iris according to a wavelength length of detected infrared ray.

15. The electronic device (100) of any one of claims 8 to 14, wherein the processor (120) performs an object tracking function based on the read out pixel group.
